Europäisches Patentamt

European Patent Office

Office européen des brevets

(19)

(11) Veröffentlichungsnummer: **0 000 712**
**B1**

(12) **EUROPÄISCHE PATENTSCHRIFT**

(21) Anmeldenummer: **78100437.9**

(22) Anmeldetag: **19.07.78**

(51) Int. Cl.³: **G 03 B 17/26**

(54) Verfahren und Vorrichtung zur Konfektionierung einer Kassette mit einem endlosen Wickel

(30) Priorität: **26.07.77 DE 2733585**

(43) Veröffentlichungstag der Anmeldung:
**21.02.79 Patentblatt 79/04**

(45) Bekanntmachung des Hinweises auf die Patenterteilung:
**25.06.80 Patentblatt 80/13**

(84) Benannte Vertragsstaaten:
**BE CH DE FR GB**

(56) Entgegenhaltungen:
**FR - A - 2 359 435**
**US - A - 3 770 551**
**US - A - 3 980 246**

(73) Patentinhaber: **Agfa-Gevaert AG**
**Patentabteilung**
**D - 5090 Leverkusen 1, Bayerwerk (DE)**

(72) Erfinder: **Johanns, Heinz**
**Heinrich-Brünning-Strasse 196**
**D - 5090 Leverkusen (DE)**
**(DE)**

EP 0 000 712 B1

Verfahren und Vorrichtung zur Konfektionierung einer Kassette mit einem endlosen Wickel

Die Erfindung betrifft ein Verfahren und eine Vorrichtung zur Konfektionierung einer Kassette mit einem endlosen Wickel aus einem abgelängten Filmband.

Für manche Filmaufnahmen - zum Beispiel Überblendungen - ist es erforderlich, das Filmband in beide Richtungen bewegen zu können. Eine besonders günstige und raumsparende Anordnung ist der Endlosfilm, bei dem das Filmband über einen Kanal zwischen Kern und Außenwindung durch einen in die Perforierung eingreifenden Filmtransport am Bildfenster zum Belichten vorbeitransportiert wird.

Bisher wurden solche Endlosfilme manuell durch Herausziehen der Enden eines Filmwickels und Verbinden dieser Enden durch einen Klebestreifen hergestellt und dann in eine flach auf dem Tisch liegende Kassette eingefädelt. Eine solche Handhabung ist bei Massenprodukten, wie z.B. beim Super-8-Film, unwirtschaftlich. Sie erfordert bei der Springfreudigkeit des Filmbandes und der engen gewundenen Kanäle viel Geschick, zumal die Beladung der Kassetten im Dunkeln erfolgen muß.

Aus der US-Patentschrift 3 770 551 ist eine Vorrichtung bekannt, welche Band (insbesondere Magnetband) von einer Vorratsspule auf eine Spule einer Bandkassette wickelt. Das vordere Ende des Bandes wird von einer oberen Spindeleinheit erfaßt und durch eine Drehung in die der Kassette entsprechende Lage gebracht. Während der obere Spindlekopf um eine Bandbreite nach oben fährt, wird die Spule mit dem Band von innen nach außen bewickelt. Nachdem die Wicklung vollendet ist, wird das Band von der Vorratsrolle getrennt. Das verbleibende Ende des Bandes wird auf Stoß an das vordere Ende gelegt, gehalten und beide Enden mit einem Klebeband zur Herstellung eines Endloswickels verklebt. Die Vorrichtung wirft dann das Kassettengehäuse mit Spule und Band aus.

Auch diese, einen Fortschritt gegenüber dem Stand der Technik zeigende Vorrichtung ist für die Aufgabe, ein endloses Band unbelichteten Films in eine Kassette zu wickeln, nicht geeignet. Das Magnetband wird in dieser Vorrichtung auf eine Spule von innen nach außen gewickelt, so daß die einzelnen Wickellagen fest aufeinander liegen. Unbelichtete photographische Filme, wie zum Beispiel Super-8-Filme, würden bei der Herstellung und dem Gebrauch der Kassette stark verschrammen und unbrauchbar werden. Außerdem läßt eine derartige Kassette nicht zu, ein Band störungsfrei in beide Richtungen zu bewegen.

Der Erfindung liegt die Aufgabe zugrunde, ein Verfahren und eine Vorrichtung zur halb- oder vollautomatischen Beladung einer Kassette mit einem endlosen Filmband zu finden, welche es gestatten, in einer einfachen, betriebssicheren Vorrichtung spulenlose Endloswickel mit lose gewickeltem Filmband herzustellen, die sich in beide Richtungen hin- und herspulen lassen.

Diese Aufgabe wird erfindungsgemäß dadurch gelöst, daß

a) das zugeführte Filmband nach Ablenkung auf eine um eine Filmbreite versetzte feststehende Bahn, welche dem Verlauf der Filmführung von der aüßeren Windung eines Wickels zum Bildfenster einer Endloskassette entspricht, zur Fixierung am Ende der Bahn geleitet wird;

b) weiteres Filmband unter Beibehaltung der Ablenkung zugeführt wird und in eine mit der Bahn verbundene, in ihrer Ebene drehende Wickelkammer, welche der Aufnahme des Wickels in einer Endloskassette entspricht, zu einem Wickel von außen nach innen gewickelt wird;

c) das nach Beendigung des Wickelvorganges angehaltene Filmband abgeschnitten und mit seinem freien Wickelende unter gleichzeitigem Versatz um eine Filmbreite entlang einer Bahn geführt wird, die der Filmführung von der inneren Windung des Wickels zum Bildfenster einer Endloskassette entspricht und auf Stoß vor das vordere Ende des Bandes gelegt und fixiert wird;

d) der endlose Wickel in bekannter Weise durch Überkleben des vorderen und hinteren Endes des Bandes mit einem Klebestreifen gebildet wird;

e) dann der Wickel mit dem endlosen Band durch einen Auswerfer in die parallel angeordnete geöffnete Filmkassette geschoben wird.

Die mit der Erfindung erzielten Vorteile bestehen insbesondere darin, daß nunmehr der Film entsprechend seiner späteren Lage in der Kassette gewickelt wird, so daß zusätzliche Beanspruchungen des Films, wie sie bei der Wickelwelle auftreten, vermieden werden. Für den Fachmann war es dabei überraschend, daß nach der Einleitung des Versatzes dieser während des gesamten Wickelvorgangs ohne weitere Eingriffe von außen erhalten bleibt. Durch die mehrdimensionale Beigung an der Umlenkstelle wird das Filmband nämlich in der Form so stabilisiert, daß es die einmal eingeschlagene Richtung beibehält, was bei der Labilität und der Springfreudigkeit des Films nicht zu erwarten war. Weiter bietet die umlaufende Wickelkammer den Vorteil, daß jede eingelegte Windung der Zentrifugalkraft unterworfen ist, die das berüchtigte Schwimmen des Wickels weitgehend verhindert. Gleichzeitig sorgt die Rückwand der Wickelkammer für eine saubere Ausrichtung der einzelnen Windungen.

In einer besonderen Durchführungsart der Verfahren wird die Umfangsgeschwindigkeit der Wickelkammer an der Einlaufstelle des Filmbandes in die Wickelkammer größer gewählt als die Zuführgeschwindigkeit des Filmbandes an dieser Stelle.

Infolge der besonderen Wickelart von außen nach innen in eine Wickelkammer ist es möglich, durch eine relativ geringere Zuführgeschwindigkeit zur Einlegegeschwindigkeit lockere Wickel sogar mit im Laufe der Wicklung veränderlicher Auflockerung herzustellen. Damit ist eine wichtige Voraussetzung für den späteren Transport von Endlosfilmen erfüllt, denn diese Eigenschaft bleibt auch nach dem Einschieben des Endlosfilmwickels in die Kassette erhalten. Durch diese besondere Möglichkeit des losen Wickelns von Bändern in Endloskassetten ist es möglich, das Band ohne Störungen in beide Richtungen - z.B. bei Überblendungen - hin- und herzuspulen.

In einer Vorrichtung zur Durchführung des Verfahrens ist als Wickelvorrichtung hinter einem Leitelement eine auf einer Welle stirnseits gelagerte Formscheibe angeordnet, die eine Wickelkammer mit einem an der Peripherie beginnenden Kanal enthält, dessen innere Wandung dem Verlauf eines Kassettenkanals entspricht und dessen äußere Wandung nach einer vorgegebenen Länge vor Klemmelementen endet, die in einer bestimmten Lage der Formscheibe mit einem Klebebandwerk korrespondieren, und es ist ein Tranportarm bewegbar von dem Trennmesser zu den Klemmelementen angeordnet und es befindet sich ein Auswerfer in der Formscheibe.

Die Vorrichtung ist übersichtlich im Aufbau und deshalb neben der hohen Betriebssicherheit besonders wartungsfreundlich.

Es kann auch direkt in eine Kasette gewickelt werden. Hierdurch wird das Filmband schonender behandelt, da der Arbeitsgang des Schiebens des fertigen Films in die Kassette mittels des Auswerfers entfällt. Außerdem wird ein Arbeitsgang gespart.

Ein Ausführungsbeispiel der Erfindung ist in den Zeichnungen dargestellt und wird im folgenden näher beschrieben.

Es zeigen:

Figur 1 Ansicht einer Wickelstation
Figur 2 Draufsicht auf eine Filmbandablenkung

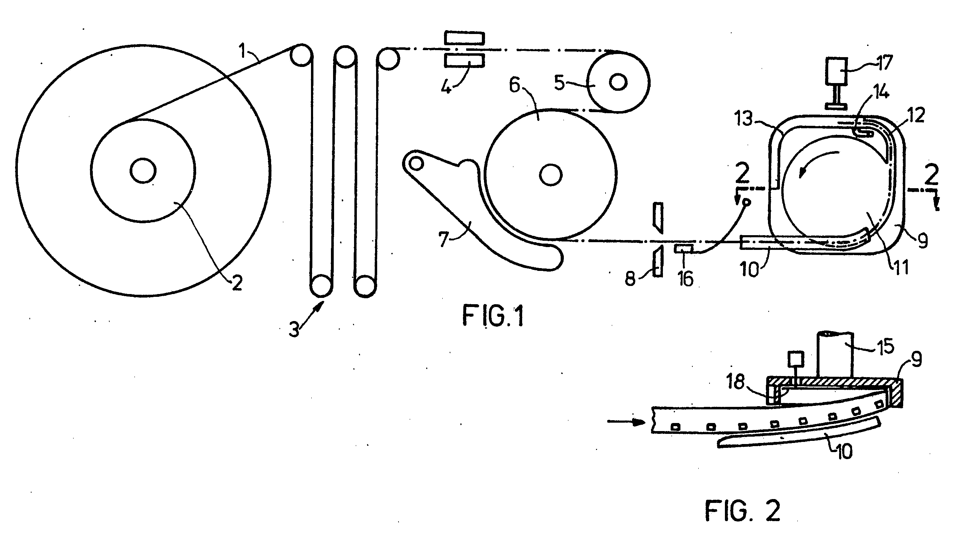

In Fig. 1 und Fig. 2 wird ein Filmband 1 von einer Vorratsspule 2 über einen Schleifenzieher 3 durch eine Stanze 4 um eine Umlenkrolle 5 von einer Zahntrommel 6 mit Andrückbacken 7 gezogen und durch Trennmesser 8 zum Ablängen des Filmbandes einer Formscheibe 9 mit einer darauf angebrachten Wickelkammer 11 und Kanälen 12, 13 unter Versatz über ein Leitelement 10 so zugeführ, daß der Filmanfang schließlich nach Durchlaufen von Wickelkammer 11 und Kanal 12 auf den als Klemmelemente ausgebildeten Saugbohrungen 14 der Formscheibe 9 nach Einschaltung von Vakuum fest zu liegen kommt. Durch Drehung der Formscheibe 9 um Welle 15 bei gleichzeitiger Zuführung des Filmbandes 1 durch die Zahntrommel 6 werden in die Wickelkammer 11 Windungen von außen nach innen eingelegt. Nach Beendigung des Wickelvorganges wird das durch Trennmesser 8 abgetrennte nunmehr freie Ende des Filmbandes 1 mit Hilfe eines Transportarmes 16 von der Zahntrommelebene 6 parallel in die Formscheibenebene auf Stoß zu dem Filmanfang gebracht, wo durch Verbinden mit Klebestreifen durch ein Klebebandwerk 17 ein endloser Filmwickel entsteht.

Der fertige Film wird über einen Auswerfer 18 in eine Kassette (nicht dargestellt) geschoben.

## Patentansprüche

1. Verfahren zur Konfektionierung einer Kassette mit einem endlosen Wickel aus einem abgelängten Filmband, wobei das vordere Ende des Bandes unter Freihaltung einer Haftfläche für ein Klebeband fixiert wird und nach Beendigung des Wickelvorganges das hintere Ende des Bandes an das vordere Ende herangeführt und mit Hilfe eines Klebebandes auf Stoß mit diesem verklebt wird, dadurch gekennzeichnet, daß

a) das zugeführte Filmband nach Ablenkung auf eine um eine Filmbreite versetzte feststehende Bahn, welche dem Verlauf der Filmführung von der äußeren Windung eines Wickels zum Bildfenster einer Endloskassette entspricht, zur Fixierung am Ende der Bahn geleitet wird,

b) weiteres Filmband unter Beibehaltung der Ablenkung zugeführt wird und in eine mit der Bahn verbundene in ihrer Ebene drehende Wickelkammer, welche der Aufnahme des Wickels in einer Endloskassette entspricht, zu einem Wickel von außen nach innen gewickelt wird,

c) das nach Beendigung des Wickelvorganges angehaltene Filmband abgeschnitten und mit seinem freien Wickelende unter gleichzeitigem Versatz um eine Filmbreite entlang einer Bahn geführt wird, die der Filmführung von der inneren Windung des Wickels zum Bildfenster einer Endloskassette entspricht und auf Stoß vor das vordere Ende des Bandes gelegt und fixiert wird,

d) der endlose Wickel in bekannter Weise durch Überkleben des vorderen und hinteren Endes des Bandes mit einem Klebestreifen gebildet wird,

e) dann der Wickel mit dem endlosen Band durch einen Auswerfer in die parallel angeordnete geöffnete Filmkassette geschoben wird.

2. Verfahren nach Anspruch 1, dadurch gekennzeichnet, daß die Umfangsgeschwindigkeit der Wickelkammer an der Einlaufstelle des Filmbandes in die Wickelkammer größer gewählt wird als die Zuführgeschwindigkeit des Filmbandes an dieser Stelle.

3. Vorrichtung zur Durchführung des Verfahrens nach Anspruch 1, bestehend aus einem Vorratswickel für das Filmband, einem Schleifenzieher für den Längenausgleich des Bandes, einer Zahntrommel für den Vorschub des Bandes, Andrückbacken für das Stoppen und Halten des Bandes, Trennmessern zum Ablängen des Bandes, einer Wickelvorrichtung sowie Klemmelementen und einer Einrichtung zum Halten und Aneinanderkleben des vorderen Endes des Bandes auf Stoß mit dem hinteren Ende des Bandes mit Hilfe eines Klebestreifens, dadurch gekennzeichnet, daß als Wickelvorrichtung hinter einem Leitelement (10) eine auf einer Welle (15) stirnseits gelagerte Formscheibe (9) angeordnet ist, die eine Wickelkammer (11) mit einem an der Peripherie beginnenden Kanal (12) enthält, dessen innere Wandung (13) dem Verlauf eines Kassettenkanals entspricht und dessen äußere Wandung nach einer vorgegebenen Länge vor Klemmelementen (14) endet, die in einer bestimmten Lage der Formscheibe (9) mit einem Klebebandwerk (17) korrespondieren und daß ein Transportarm (16) bewegbar von den Trennmmessern (8) zu den Klemmelementen (14) angeordnet ist und daß sich ein Auswerfer (18) in der Formscheibe (9) befindet.

**Claims**

1. A method for loading a cassette with an endless roll from a cut length of film strip, in which the front end of the film strip is fixed, an adhesive surface being kept free for an adhesive tape, and after completion of the winding process the latter end of the film strip is led towards the front end and is stuck edge to edge to this front end by means of an adhesive strip, characterised in that

a) one end of film strip is supplied and led, after deflection, into a stationary track, which is offset from the supply plane by a film width and corresponds to the path of the film guide passage of an endless cassette from the outer winding of a roll to its film gate, in order to be fixed at the end of the track,

b) with the deflection maintained, a further portion of the film strip is supplied and is wound onto a roll, from the outside to the inside, in a rotating winding chamber which is joined to the track and rotates in the same plane, which chamber corresponds to the film take-up in an endless cassette;

c) the film strip comes to a standstill upon completion of the winding process and is cut off and the free end is simultaneously displaced by a film width along a contour corresponding to the film guide passage of an endless cassette, from the inner winding of the roll to its film gate and is placed edge to edge in front of the front end of the film strip and fixed,

d) the endless roll is formed, in a known manner, by sticking an adhesive strip over the front and latter end of the film strip,

e) the roll with the endless film strip is pushed by means of an ejector into the parallel open film cassette.

2. A method according to claim 1, characterised in that the circumferential speed of the winding chamber at the point where the film strip runs into the winding chamber is chosen so that it is greater than the feed rate of the film strip at this point.

3. An apparatus for carrying out the method according to claim 1, consisting of a supply roll for the film strip, a loop-forming means for the tension compensation of the film strip, a sprocket wheel for forwarding the film strip, pressure pads for stopping and holding the strip, severing blades for cutting the film strip, a winding apparatus as well as clamping elements and a device for holding and sticking the front end of the strip edge to edge to the latter end of the strip with the aid of an adhesive strip, characterised in that a shaped part (9), located at the end of a shaft (15) is arranged behind a guide element (10) as a winding apparatus, this part containing a winding chamber (11) with a passage (12) beginning at the periphery, whose inner wall (13) corresponds to the path of a cassette passage and whose outer wall ends after a predetermined length in front of clamping elements (14) which correspond to an adhesive tape mechanism at a specific position of the shaped part (9), and a transporting arm (16) is arranged to move from the severing blades (8) to the clamping elements (14) and an ejector (18) is located in the shaped part (9).

**Revendications**

1. Procédé de confection d'une cassette avec un rouleau sans fin à partir d'une bande de pellicule à longueur, dans lequel l'extrémité avant de la bande est fixée en ménageant une surface d'adhérence pour un ruban collant et où, après achèvement de la phase d'enroulement, l'extrémité arrière de la bande est amenée contre l'extrémité avant pour y être collée à l'aide d'un ruban collant en contact avec celle-ci, caractérisé en ce que:

a) la bande de pellicule introduite après déviation sur un chemin fixe qui est décalé d'une largeur de bande et qui correspond au trajet de guidage de la pellicule entre la spire extérieure d'un rouleau et la fenêtre d'une cassette sans fin, est guidée en vue de la fixation à l'extrémité du chemin;

b) la bande continue à être introduite avec maintien de la déviation et elle est enroulée en un rouleau de l'extérieur vers l'intérieur, dans une chambre reliée au chemin, tournant dans son plan et correspondant à la réception du rouleau dans une cassette sans fin;

c) à la fin de la phase d'enroulement, la bande attenante est coupée et son extrémité d'enroulement libre est introduite, avec décalage simultané d'une largeur de bande, le long d'un chemin qui correspond au guidage de la spire intérieure du rouleau vers la fenêtre d'une cassette sans fin, elle est présentée devant l'extrémité avant de la bande et elle est fixée;

d) le rouleau sans fin est constitué d'une façon connue par collage des extrémités avant et arrière de la bande avec un ruban collant; et

e) ensuite le rouleau avec la bande sans fin est amené par un éjecteur dans la cassette ouverte placée en parallèle.

2. Procédé selon la revendication 1, caractérisé en ce que la vitesse périphérique de la chambre d'enroulement au point d'introduction de la bande dans la chambre est choisie plus grande que la vitesse de fourniture de la bande à cet endroit.

3. Dispositif pour la mise en oeuvre du procédé selon la revendication 1, se composant d'un rouleau d'alimentation pour la bande de pellicule, d'un extracteur à boucles pour l'équilibrage en longueur de la bande, d'un tambour denté pour l'avance de la bande, de mâchoires de pression pour l'arrêt et le maintien de la bande, de cisailles pour la mise à longueur de la bande, d'un dispositif d'enroulement ainsi que d'éléments de serrage et d'un dispositif pour maintenir et pour coller l'une à l'autre l'extrémité avant de la bande en contact avec l'extrémité arrière à l'aide d'un ruban collant, caractérisé en ce qu'on place comme dispositif d'enroulement, derrière un élément de guidage, un disque moulé logé à la partie frontale sur un arbre et qui contient une chambre d'enroulement avec un canal commençant à la périphérie et dont la paroi intérieure correspond au parcours d'un canal de cassette, et dont la paroi extérieure se termine, après une longueur déterminée, devant des éléments de serrage qui, dans une position déterminée du disque moulé, correspondent à un dispositif à ruban collant, en ce qu'on a placé un bras de transport mobile entre la cisaille et les éléments de serrage, et en ce qu'il existe un éjecteur dans le disque moulé.

FIG.1

FIG. 2

0 000 712